Europäisches Patentamt

European Patent Office

Office européen des brevets

(19)

(11) Veröffentlichungsnummer : **0 175 690**
**B1**

(12) **EUROPÄISCHE PATENTSCHRIFT**

(45) Veröffentlichungstag der Patentschrift :
09.09.87

(21) Anmeldenummer : 84901751.2

(22) Anmeldetag : 09.04.84

(86) Internationale Anmeldenummer :
PCT/EP 84/00104

(87) Internationale Veröffentlichungsnummer :
WO/8404792 (06.12.84 Gazette 84/28)

(51) Int. Cl.⁴ : **F 16 H   1/455**

(54) **VERTEILERGETRIEBE MIT VISKOSEKUPPLUNG.**

(30) Priorität : 01.06.83 PCT/EP83/00140

(43) Veröffentlichungstag der Anmeldung :
02.04.86 Patentblatt 86/14

(45) Bekanntmachung des Hinweises auf die Patenterteilung : 09.09.87 Patentblatt 87/37

(84) Benannte Vertragsstaaten :
DE FR GB SE

(56) Entgegenhaltungen :
GB-A- 1 252 753
GB-A- 1 411 283
Automotive Engineer, Band 6, Nr. 2, April/Mai 1981,
Southend-on-Sea, Essex (GB) "FF Developments poised for OE Expansion", Seite 28; Figur 12a

(73) Patentinhaber : ZAHNRADFABRIK FRIEDRICHSHA-
FEN AKTIENGESELLSCHAFT
Löwentaler Strasse 100 Postfach 2520
D-7990 Friedrichshafen 1 (DE)

(72) Erfinder : MAGG, Alfred
Albrechtstr. 57
D-7990 Friedrichshafen (DE)

(74) Vertreter : Raue, Reimund
Zahnradfabrik Friedrichshafen AG Löwentaler
Strasse 100 Postfach 2520
D-7990 Friedrichshafen 1 (DE)

EP 0 175 690 B1

## Beschreibung

Gegenstand der Erfindung ist ein Verteilergetriebe mit Viskosekupplung nach dem Oberbegriff aus Anspruch 1. Ein solches Getriebe ist in der DE-AS-21 35 791 beschrieben. Dabei sind zahlreiche komplizierte Einzelteile verwendet, deren Herstellung umfangreiche Arbeitsgänge, insbesondere spangebende Formgebung, erfordert. Auch das Gewicht solcher Einzelteile ist unerwünscht hoch.

Aufgabe der Erfindung ist es, die Fertigung zu vereinfachen, das Gewicht zu reduzieren und die Montage und Wartung zu erleichtern. Diese Aufgabe wird durch eine Ausführung nach dem Anspruch 1 der Erfindung gelöst. Die Viskosekupplung 7 liegt an der für die Wartung günstigsten Stelle und auch weit genug von der Gehäuseflanschfläche 24 entfernt, um diese vor schädlichen Temperatureinwirkungen bei extremem Schlupf der Kupplung 7 zu schützen. Durch die gewählte Anordnung des Umlaufgetriebes 1 axial zwischen Abtriebsrad 6 und Kupplung 7 können Sonnenrad 5 und Abtriebsrad 6 zu einem einzigen, einfachen Bauteil 5, 6 zusammengefaßt werden, das durch Kaltumformen, Gießen oder Sintern als billiges Massenprodukt hergestellt werden kann. Ebenso günstig kann die geometrisch ähnliche Hohlwelle 8 gefertigt werden.

Koppeltopf 14, Topf 15, Deckel 16 und Hohlrad 4 werden in Blechumformtechnik als billige Massenfertigungsteile mit geringer Wandstärke und daher geringem Gewicht hergestellt. Die Verbindungen 19, 20, 21, 22, 23 werden entweder als platz- und aufwandsparende Umfangsschweißnähte ausgeführt oder aber als Mitnahmeprofile, wenn Montage und Wartung dadurch verbessert werden.

Die Lamellenkette 18 mit Wiegegelenken hat gegenüber der normalen Rollenkette mehrere Vorteile :

Abtriebsrad 6 als Kettenrad mit Evolventenprofil, daher gemeinsame Verzahnung mit Sonnenrad 5 möglich, auf jeden Fall einfache Fertigung ;

größer Traganteil der Lamellenzähne, daher entweder größere Lebensdauer oder kleinere Baugröße oder Werkstoff geringerer Festigkeit ;

besserer Wirkungsgrad durch Wiegegelenke, daher geringere Erwärmung.

In der Zeichnung sind Ausführungsbeispiele nach der Erfindung im Längsschnitt dargestellt.

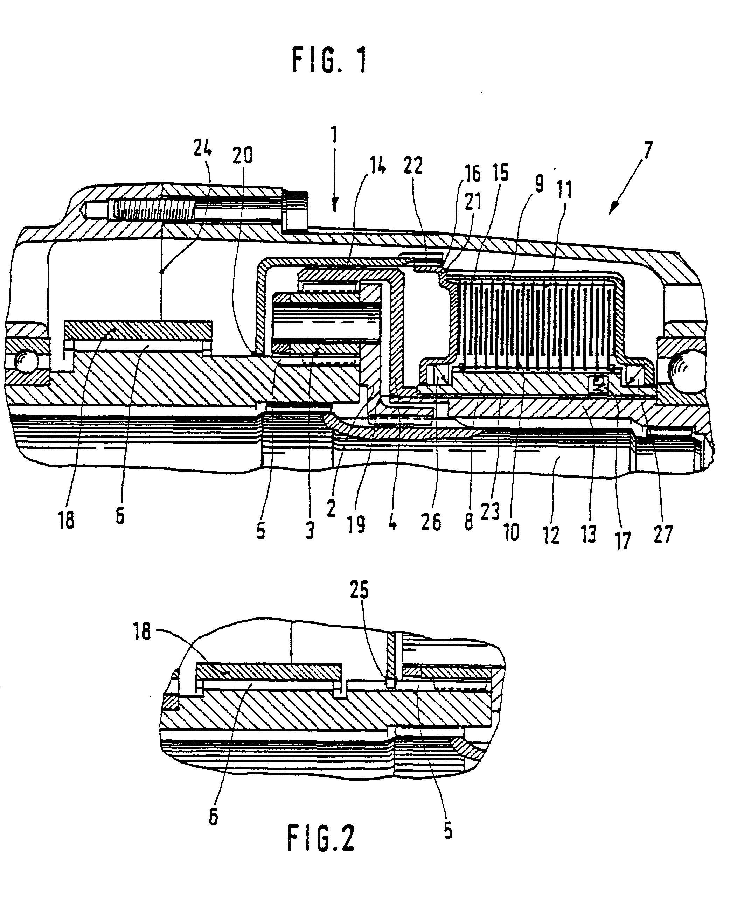

Figur 1 zeigt die Anordnung des Verteilergetriebes 1 mit Steg 2, Umlaufrädern 3, Hohlrad 4 und Sonnenrad 5 axial zwischen dem Abtriebsrad 6 und der Viskosekupplung 7 mit Hohlwelle 8, Gehäusemantel 9, Innenlamellen 10 und Außenlamellen 11. Sonnenrad 5 und Abtriebsrad 6 bilden zusammen ein einziges Bauteil.

Figur 2 zeigt einen Ausschnitt aus Fig. 1 mit einer Ausführung nach Anspruch 3.

Die Antriebswelle 12 treibt den Steg 2 des Verteilergetriebes 1 an. Das Hohlrad 4 ist mit der Abtriebswelle 13 und mit der Hohlwelle 8 der Kupplung 7 verbunden. Das Sonnenrad 5 ist mit dem Abtriebsrad 6 und über den Koppeltopf 14 mit dem Gehäusemantel 9 der Kupplung 7 verbunden. Der Gehäusemantel 9 der Kupplung 7 ist aus einem Topf 15 und einem Deckel 16 zusammengesetzt. Der Hohlraum der Kupplung 7 ist im wesentlichen mit einem hochviskosen Silikonöl gefüllt. Ein Druckbegrenzungsventil 17 in der Hohlwelle 8 schützt den Gehäusemantel 9 vor Überlastung durch die Wärmedehnung des Silikonöles bei langzeitigem, großem Schlupf.

Bezugszeichen

1 Verteilergetriebe
2 Steg
3 Umlaufrad
4 Hohlrad
5 Sonnenrad
6 Abtriebsrad
7 Viskosekupplung
8 Hohlwelle
9 Gehäusemantel
10 Innenlamelle
11 Außenlamelle
12 Antriebswelle
13 Abtriebswelle
14 Koppeltopf
15 Topf
16 Deckel
17 Druckbegrenzungsventil
18 Kette
19 Verbindung, Umfangsschweißnaht oder Mitnahmeprofil
20 Verbindung, Umfangsschweißnaht
21 Verbindung, Umfangsschweißnaht
22 Verbindung, Mitnahmeprofil
23 Verbindung, Mitnahmeprofil
24 Gehäuseflanschfläche
25 Verbindung, Mitnahmeprofil
26 Dichtung
27 Dichtung

## Patentansprüche

1. Verteilergetriebe (1) mit Viskosekupplung (7) mit den Merkmalen :

das Verteilergetriebe (1) ist ein Stirnrad-Umlaufgetriebe mit einem Steg (2) mit Umlaufrädern (3), mit einem Hohlrad (4) und einem Sonnenrad (5) ;

der Steg (2) ist mit einer Antriebswelle (12) verbunden ;

das Hohlrad (4) ist mit einem ersten Abtrieb in Form einer Abtriebswelle (13) verbunden ;

das Sonnenrad (5) ist mit einem zweiten Abtrieb in Form eines Abtriebsrades (6) verbunden ;

die Viskosekupplung (7) verbindet das Hohlrad (4) und das Sonnenrad (5) miteinander ;

die Viskosekupplung (7) hat eine Hohlwelle (8) und einen Gehäusemantel (9) ;

die Hohlwelle (8) trägt in einem äußeren Mitnahmeprofil Innenlamellen (10) ;

der Gehäusemantel (9) trägt in einem inneren Mitnahmeprofil Außenlamellen (11) ;

die Viskosekupplung (7) ist im wesentlichen mit einem hochviskosen Silikonöl gefüllt ;

gekennzeichnet durch die Merkmale :

das Umlaufgetriebe (1) ist axial zwischen dem Abtriebsrad (6) und der Viskosekupplung (7) angeordnet ;

das Sonnenrad (5) und das Abtirebsrad (6) sind zusammen ein einziges Bauteil ;

das Sonnenrad (5) ist mit dem Gehäusemantel (9) durch einen das Hohlrad (4) übergreifenden Koppeltopf (14) verbunden.

2. Getriebe nach Anspruch 1, dadurch gekennzeichnet, daß das Sonnenrad (5) und das mit diesem Sonnenrad (5) ein einziges Bauteil bildende Abtriebsrad (6) im wesentlichen spanlos durch Sintern, Gießen oder Kaltumformen hergestellt sind.

3. Getriebe nach einem der vorangehenden Ansprüche, dadurch gekennzeichnet, daß das Abtriebsrad (6) die gleiche Verzahnung wie das Sonnenrad (5) hat.

4. Getriebe nach einem der vorangehenden Ansprüche, dadurch gekennzeichnet, daß das Abtriebsrad (6) ein Kettenrad ist.

5. Getriebe nach einem der vorangehenden Ansprüche, dadurch gekennzeichnet, daß der Koppeltopf (14) ein Blechumformteil ist, über ein Mitnahmeprofil (22) mit dem Gehäusemantel (9) und über ein Mitnahmeprofil (25) oder eine Umfangsschweißnaht (20) mit dem Sonnenrad (5) bzw. dem Abtriebsrad (6) verbunden ist.

6. Getriebe nach einem der vorangehenden Ansprüche, dadurch gekennzeichnet, daß das Hohlrad (4) ein Blechumformteil ist und über ein Mitnahmeprofil (19) oder eine Umfangsschweißnaht (19) mit der Abtriebswelle verbunden ist.

7. Getriebe nach einem der vorangehenden Ansprüche, dadurch gekennzeichnet, daß die Hohlwelle (8) im wesentlichen spanlos durch Sintern, Gießen oder Kaltumformen hergestellt ist.

8. Getriebe nach einem der vorangehenden Ansprüche, dadurch gekennzeichnet, daß der Gehäusemantel (9) aus zwei Blechumformteilen besteht, nämlich einem Topf (15) und einem Deckel (16), die nach dem vollständigen Zusammenbau der Kupplung (7) durch eine Umfangsschweißnaht (21) miteinander verbunden werden, und zur Hohlwelle (8) durch Dichtungen (26, 27) abgedichtet ist.

9. Getriebe nach einem der vorangehenden Ansprüche, dadurch gekennzeichnet, daß die Hohlwelle (8) über ein Mitnahmeprofil (23) mit der Abtriebswelle (13) verbunden ist.

**Claims**

1. A distributor gear set (1) with a visco clutch (7), with the following features :

the distributor gear (1) is a spur gear type planetary gear set with a planet carrier (2) with planet gears (3), with a hollow gear (4) and a sun gear (5) ;

the planet carrier (2) is connected with an input shaft (12) ;

the hollow gear (4) is connected with a first output element in the form of an output shaft (13) ;

the sun gear (5) is connected with a second output element in the form of an output gear (6) ;

the visco clutch (7) connects the hollow gear (4) and the sun gear (5) ;

the visco clutch (7) has a hollow shaft (8) and a housing shell (9) ;

the hollow shaft (8) carries inner discs (10) on an external driving spline ;

the housing shell (9) carries outer discs (11) on an internal driving spline ;

the visco clutch (7) is mainly filled with a high viscosity silicon oil ;

characterized in that

the planetary gear set (1) is arranged axially between the output gear (6) and the visco clutch (7) ;

the sun gear (5) and the output gear (6) are one integral component ;

the sun gear (5) is connected to the housing shell (9) via a coupling shell (14) encompassing the hollow gear (4).

2. A gear set acc. to claim 1, characterized in that the sun gear (5) and the output gear (6) forming together one integral component, are mainly manufactured without machining processes but by sintering, casting or cold shaping.

3. A gear set acc. to one of the preceding claims, characterized in that the output gear (6) has the same gearing as the sun gear (5).

4. A gear set acc. to one of the preceding claims, characterized in that the output gear (6) is a sprocket gear.

5. A gear set acc. to one of the preceding claims, characterized in that, the coupling shell (14) is a cold shaped sheet component ;

the coupling shell (14) is connected to the housing shell (9) via a driving profile (22) ;

the coupling shell (14) is connected to the sun gear (5) via a driving profile (25) or via a welding seam (20).

6. A gear set acc. to one of the preceding claims, characterized in that the hollow gear (4) is a cold shaped sheet component ;

the hollow gear (4) is connected to the output shaft (13) via a driving profile (19) or via a welding seam (19).

7. A gear set acc. to one of the preceding claims, characterized in that the hollow shaft (8) is mainly manufactured without machining processes but by sintering, casting or cold shaping.

8. A gear set acc. to the preceding claims, characterized in that the housing shell (9) initially consists of two cold shaped sheet components, i. e. a shell (15) and a cover (16), which are connected to each other via a welding seam (21) after complete assembly of the clutch (7), and sealed to the hollow shaft (8) by sealings (26, 27).

9. A gear set acc. to one of the preceding claims, characterized in that the hollow shaft (8) is connected to the output shaft (13) via a driving profile (23).

## Revendications

1. Engrenage distributeur (1) avec visco-coupleur (7), dans lequel :

l'engrenage distributeur (1) est un engrenage planétaire à pignons droits comportant un porte-satellites (2), des roues satellites (3), une roue à denture intérieure (4) et une roue planétaire (5) ;

le porte-satellites (2) est relié à un arbre primaire (12) ;

la roue à denture intérieure (4) est reliée à un premier membre de sortie formé par un arbre de sortie (13) ;

la roue planétaire (5) est reliée à un second membre de sortie formé par un pignon de sortie (6) ;

le visco-coupleur (7) relie la roue à denture intérieure (4) à la roue planétaire (5) ;

le visco-coupleur (7) comporte un arbre tubulaire (8) et un carter (9) ;

l'arbre tubulaire (8) porte des lamelles intérieures (10) sur un profil extérieur d'entraînement ;

le carter (9) porte des lamelles extérieures (11) sur un profil intérieur d'entraînement ;

le visco-coupleur (7) est principalement rempli d'une huile de silicone à haute viscosité ; caractérisé en ce que

l'engrenage planétaire (1) est placé axialement entre le pignon de sortie (6) et le visco-coupleur (7) ;

la roue planétaire (5) et le pignon de sortie (6) constituent ensemble une seule pièce,

la roue planétaire (5) est reliée audit carter (9) par une calotte d'accouplement (14) recouvrant la roue à denture intérieure (4).

2. Engrenage selon la revendication 1, caractérisé en ce que la roue planétaire (5) et le pignon de sortie (6), formant une seule pièce avec cette roue planétaire (5), sont réalisés essentiellement sans usinage, par frittage, coulage ou formage à froid.

3. Engrenage selon l'une des revendications précédentes, caractérisé en ce que le pignon de sortie (6) a la même denture que la roue planétaire (5).

4. Engrenage selon l'une des revendications précédentes, caractérisé en ce que le pignon de sortie (6) est un pignon pour chaîne.

5. Engrenage selon l'une des revendications précédentes, caractérisé en ce que ladite calotte de couplage (14) est une pièce en tôle façonnée qui est reliée au carter (9) par un profil d'entraînement (22) et à la roue planétaire (5) ou au pignon de sortie (6) par un profil d'entraînement (25) ou par un cordon de soudure périphérique (20).

6. Engrenage selon l'une des revendications précédentes, caractérisé en ce que la roue à denture intérieure (4) est une pièce en tôle façonnée qui est reliée à l'arbre de sortie par un profil d'entraînement (19) ou par un cordon de soudure périphérique (19).

7. Engrenage selon l'une des revendications précédentes, caractérisé en ce que l'arbre tubulaire (8) est réalisé essentiellement sans usinage, par frittage, coulage ou formage à froid.

8. Engrenage selon l'une des revendications précédentes, caractérisé en ce que ledit carter (9) est constitué de deux pièces en tôle façonnée, à savoir un pot (15) et un couvercle (16), qui sont liées l'une à l'autre par un cordon de soudure périphérique (21) après assemblage complet du visco-coupleur (7) et qui sont rendues étanches vers l'arbre tubulaire (8) au moyen de joints d'étanchéité (26, 27).

9. Engrenage selon l'une des revendications précédentes, caractérisé en ce que l'arbre tubulaire (8) est relié audit arbre de sortie (13) par un profil d'entraînement (23).

# FIG. 1

# FIG.2

1